# EUROPEAN PATENT APPLICATION

(11) **EP 1 962 396 A2**
(43) Date of publication of application: **27.08.2008**
(21) Application number: 08460006.3
(22) Date of filing: 19.02.2008
(51) Int. Cl.: H02B 7/06

(54) **Transformer station**

(30) Priority: 23.02.2007 PL 38183507
(71) Applicant: Certe Sp. z o.o., 59-300 Lubin (PL)
(72) Inventor: Napierala, Jaroslaw, 59-300 Lubin (PL)

(57) **Abstract**

The invention provides a transformer station, in particular a movable type, for use in the delivery of electrical power to electric appliances in contaminated and onerous environment.

A transformer station consists of at least two compartments having separate housings (I, II) connected via a common support frame and electrical passes, situated side by side along the side walls at a certain distance, forming ventilation slot (C), inside one of the housings (I) compartment (A) of law voltage control and signal instrumentation (1) being placed, its wall facing ventilation slot (C) being equipped with insulation cover (2). According to the variety of the invention, expansion openings are provided on the common wall of medium voltage compartment (F) containing isolating switch (8) and of bushing insulators (9) compartment (G), whereas in an opening a safety membrane (8.1) with a circumferential sealing on its periphery is provided separably in the wall separating compartment (f) of medium voltage isolating switch (8) from compartment (E) of fan (7).

## Description

The invention provides a transformer station, in particular a movable type, for use in the delivery of electrical power to electric appliances in contaminated and onerous environment.

Delivery of electrical power particularly in mining requires frequent relocation of a transformer station to follow the work progress. Furthermore, especially in underground mining of mineral deposits, careful protection of a transformer station against dusty and moist atmosphere is required. In such conditions transformer stations in metallic housings divided into compartments in which electrical equipment, among others, a power transformer with a horizontal partition giving a required air flow direction, a medium voltage isolating switch, low voltage installation, a power switch, control and signal instrumentation, and other equipment are used. Mounted on a wall of a power transformer is a cooling radiator, as is the case e.g. in USA patent description No 714210 (B2). Ventilation is predominantly gravitational, as provided, among others, in French patent description No 2877151. In order to further lower the temperature inside the compartments, the housing incorporates a system of forced ventilation using air filers on the suction side and slots on the discharge side.

In the operating conditions of underground mines where the air escaping from the discharge slots gives rise to additional clouds of dust, air filters soon get clogged and fail to perform their filtering function. Such situations cause disturbances in forced air circulation, and, in consequence, overheating of the electrical equipment inside the transformer station and a temperature rise, which may lead to damaging or oven destruction of the electrical equipment, the employees safety being exposed to risk, too.

The purpose of the invention is to solve the question of safe and long operation of a transformer station by maintaining permissible temperatures inside the transformer station compartments, which are significantly different for individual electrical equipment and apparatus, and to provide for the tightness of the transformer station compartments, while simultaneously meeting the limiting requirement of maintaining the suitable dimensions of the transformer station.

A transformer station according to his invention consists of at least two compartments having separate closed housings connected via a common supporting frame and electrical passes, situated side by side at a certain distance, forming a ventilation slot, inside one of the housings a compartment comprising law voltage control and signal instrumentation, inclusive of the power switch, being placed. The wall of the compartment housing containing the control and signal instrumentation and facing the ventilation slot is equipped with an insulation cover. It consists of a layer of metal sheet facing the ventilation slot, which constitutes a screen reflecting electromagnetic radiation, specifically infrared radiation, and a layer of insulating foam. The compartment housings are situated, side by side, along the side walls. The ventilation slot, on the other hand, is limited by the side covers, which reinforces the structure connecting the compartments and creates the conditions favoring so called stack draft, i.e. air flow from bottom to top. The electrical connections placed in tubular electrical passes located perpendicularly to the side walls forming the ventilation slot provide the control and signal communication between the compartments. Each compartment is equipped with doors or hatches with tightening elements, which provide access to the electrical equipment and to the control and signal instrumentation as well as the required tightness.

Because of the heat generated by the power transformer, it is necessary to cool the transformer and to lower the temperature inside the housing of the compartments containing the medium voltage electrical equipment with forced air circulation by means of a fan, and to equalize the temperatures in the compartments. In order to provide for air circulation in the wall separating the fan compartment from the power transformer compartment, there is an inlet opening for return air situated above the horizontal partition of the power transformer. Furthermore, the covers of the power transformer compartment are equipped with cooling radiators. The support frame rests on skids which are used for placing and moving the transformer station.

A variety of the invention is a transformer station in a housing divided into compartments of electrical equipment, arranged side by side in succession, i.e. power transformer compartment, fan compartment, medium voltage isolating switch compartment and bushing insulators compartment. On the common wall of the bushing insulators compartment and of the medium voltage isolating switch compartment there are gas expansion openings, whereas on the wall separating the medium voltage isolating switch compartment from the fan compartment there is a safety membrane equipped with circumferential seal on its periphery. The safety membrane is pushed out of the opening if there is an arc-type short-circuit and accumulation of gas pressure inside the bushing insulators compartment or in the medium voltage isolating switch compartment.

The solution of this invention solves the problem of securing the durability of a transformer station and provides a high degree of safety in its operation. Providing a separate housing equipped with a ventilation slot for the control and signal instrumentation compartment makes possible adequate protection of the control and signal instrumentation against overheating, and increased thermal tolerance for the remaining compartments containing electrical equipment, which creates prerequisite for tight closure of the doors and hatches with simultaneous application of ventilation of closed circulation of air in the compartments of the power transformer and of the fan. Besides, suitable dimensions of the station are maintained, which is the condition for using the station in underground mining.

The solution of the variety of the invention, on the other hand, protects against uncontrolled increase of the pressure inside the bushing insulators compartment by allowing the gas to expand into the remaining compartments.

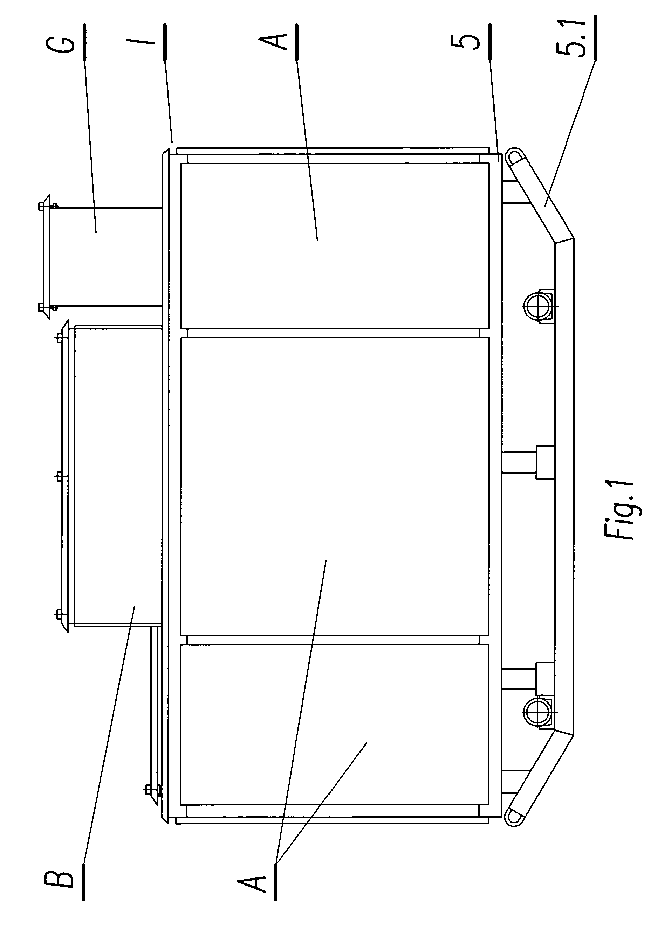

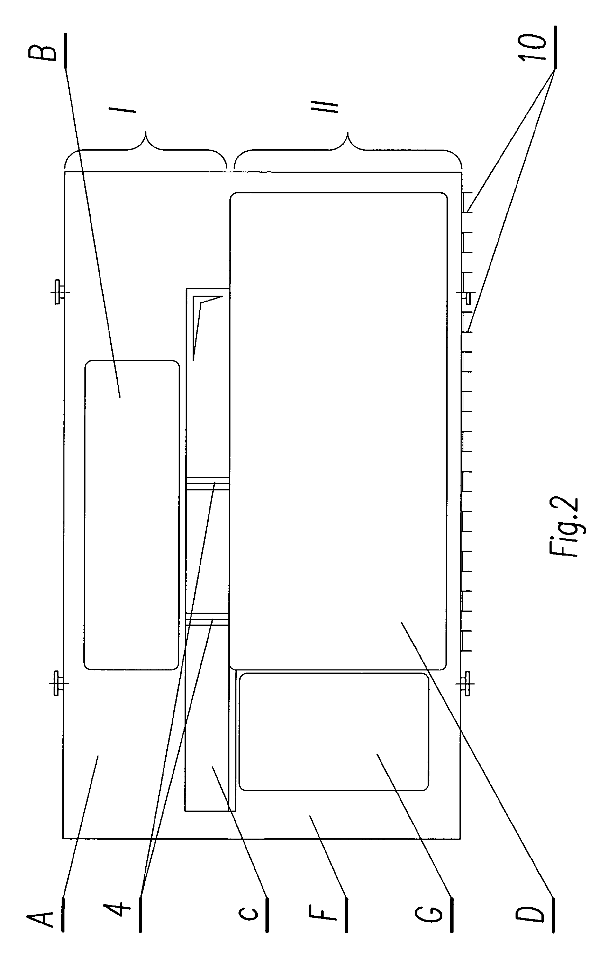

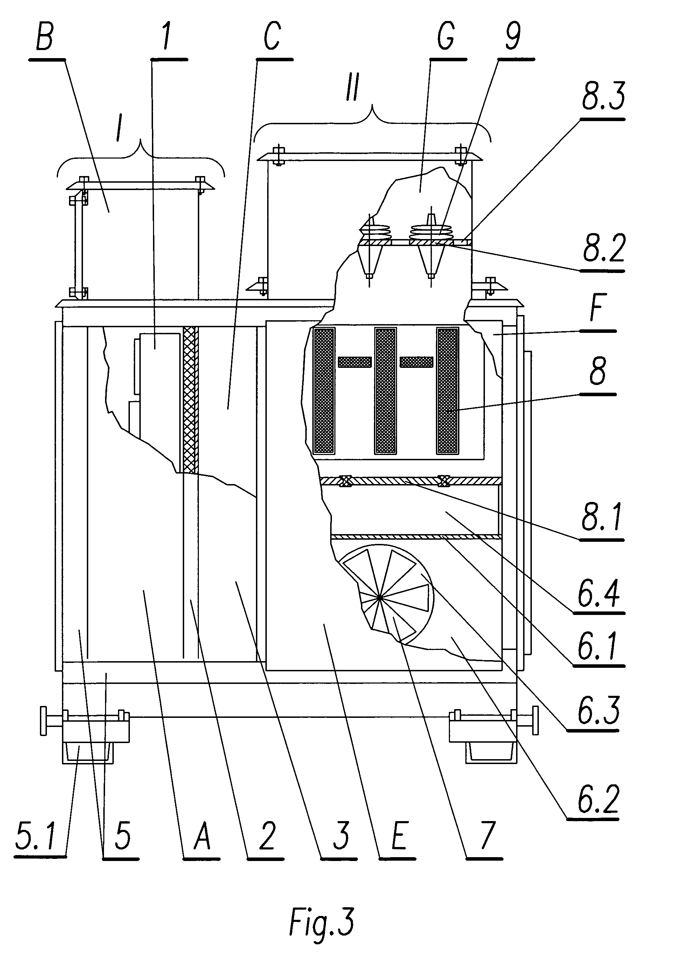

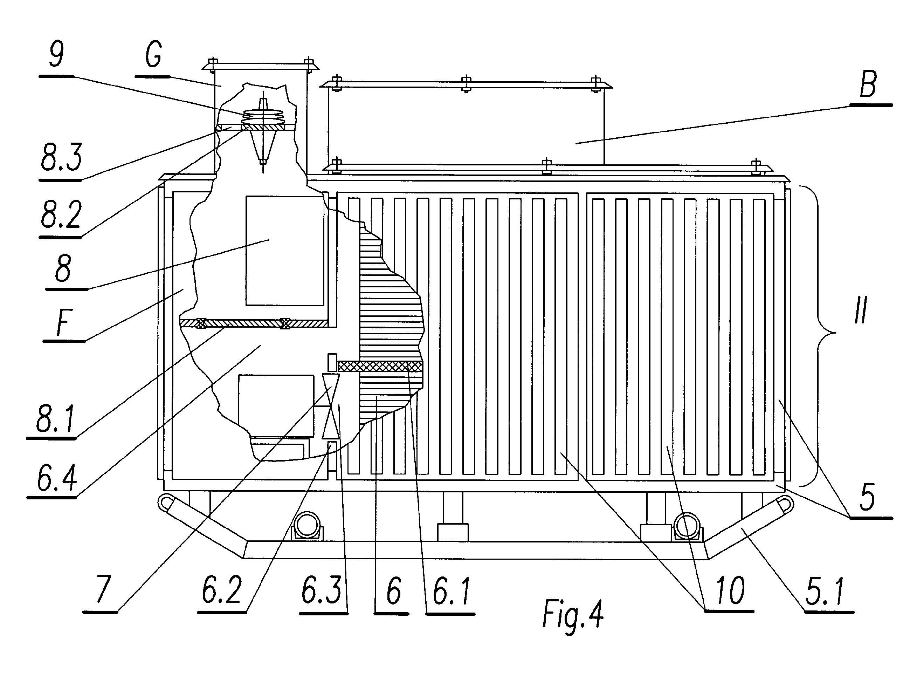

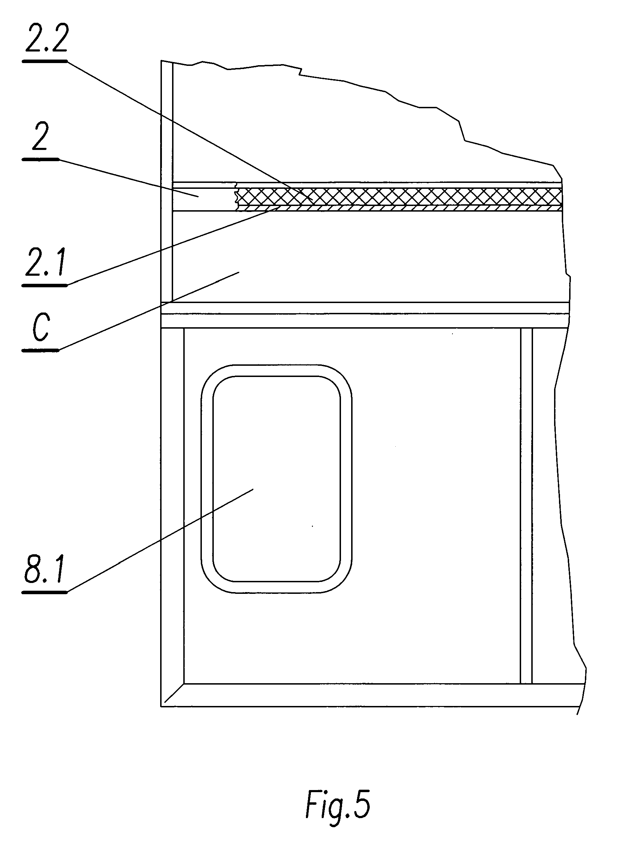

The subject matter of the invention is shown in examples of embodiment in the drawing in which fig.1 represents a front view of a transformer station, fig. 2 - a top view of the station, fig. 3 - a side view of the station with partially exposed compartments, fig. 4 represents a rear view of the transformer station with partially exposed compartments, fig. 5 - a top view of the bottom wall of the medium voltage isolating switch compartment.

### Example 1.

A transformer station consists of six compartments situated in two separate housings I and II. On the front side of the transformer station in housing I there is compartment A in which low voltage control and signal instrumentation 1 with a power switch are placed. Located on compartment A is also low voltage connecting compartment B of low voltage leakages. Parallel to housing I there is housing II at a distance of about 1/7 of the width of the transformer station. Between the long side walls of housing I and housing II there is a ventilation slot C. The wall of housing I facing ventilation slot C is equipped with insulation cover 2 consisting of two layers: steel sheet layer 2.1 having the properties of reflecting electromagnetic radiation, especially infrared, and insulating foam layer 2.2. Ventilation slot C is closed by side covers 3 mounted onto the side walls of housing I and II. Between the neighboring side walls of housing I and housing II within ventilation slot C there are tubular electrical passes 4 perpendicular to said side walls. Housings I and II are connected by common support frame 5 and the electric passes. Housing II contains four compartments: D, E, F, G to be used for locating electrical equipment. Compartment D contains power transformer 6; at about 1/2 of its height there is partition 6.1 separating the streams of inlet air and return air. Beside compartment D there is separated by wall 6.2 compartment E of fan 7 which blows air through opening 6.3 to compartment D of power transformer 6. In wall 6.2 above separating partition 6.1 there is opening 6.4 of return air. Above compartment E there is compartment F of medium voltage isolating switch 8. Compartment A in which low voltage control and signal instrumentation 1 and the power switch are placed is equipped with doors with sealing elements, while the remaining compartments are equipped with hatches with sealing elements. Support frame 5 rests on skids 5.1.

### Example 2.

The structure of a transformer station is as shown in example 1, housings I and II being situated side by side at a distance of about 1/9 of the width of the transformer station. In the bottom wall of compartment F, on the other hand, there is on opening plugged with safety membrane 8.1 equipped with a circumferential seal on its periphery. Above the compartment there is compartment G of bushing insulators 9. In upper wall 8.2 of compartment F and simultaneously in the lower wall of compartment G there are expansion openings 8.3 of the gases generated in the case of arc- type short circuit. The covers of the power transformer compartments are equipped with cooling radiators 10.

During operation of the transformer station, the housings of the compartments are tightly closed against penetration by contaminated air. Because of the heat generated by power transformer 6, fan 7 is switched on and it pushes air to the lower part of power transformer compartment D and cools the winding of power transformer 6. Then air flows through the cooling slots of the windings of power transformer 6 to the upper part of the compartment above separating partition 6.1 and returns to compartment E of fan 7 through inlet opening 6.4. As a result of the heating of the wall of power transformer compartment 6, initiated is the heating of the air space in ventilation slot C from which heat convection with the air flowing from bottom to top takes place. Furthermore, the emitted infrared radiation is reflected from the layer of insulation cover 2, which effectively insulates the wall of compartment wall A containing low voltage control and signal instrumentation 1 against heat transfer.

### List of designations of the drawing figures

**I.** - Housing containing compartments A and B
**II.** - Housing containing compartments D, E, F, G
   **A** - Compartment with control and signal instrumentation 1
   **B** - Low voltage leakage connecting compartment
   **C** - Ventilation slot
   **D** - Power transformer 6 compartment
   **E** - Fan compartment 7
   **F** - Medium voltage isolating switch 8 compartment
   **G** - Bushing insulator 9 compartment
      **1** - Low voltage control and signal instrumentation
      **2** - Insulating cover
         **2.1** - Layer of steel sheet
         **2.2** - Layer of insulation foam
      **3** - Side covers
      **4** - Electrical passes
      **5** - Support frame
         **5.1** - Skids
      **6** - Power transformer
         **6.1** - Separating partition
         **6.2** Wall between compartment D and E
         **6.3** - Opening in wall 6.2
         **6.4** Return air opening in wall 6.2
      **7** - Fan
      **8** - Medium voltage isolating switch in compartment F
         **8.1** - Safety membrane
         **8.2** - Upper wall of compartment F
         **8.3** - Expansion openings
      **9** - Bushing insulators
      **10** - Cooling radiators

## Claims

1. A transformer station divided into compartments placed in a metallic housing, in which electrical equipment is located, among others, a power transformer, a medium voltage isolating switch, a power switch, a fan and medium voltage control and signal instrumentation, **wherein** it consists of at least two compartments having separate housings (I, II) connected by a common support frame and electrical passes, situated side by side at a certain distance, forming ventilation slot (C), inside one housing (**I**) being placed compartment (A) of low voltage control and signal instrumentation (1), of which the wall facing ventilation slot (C) is provided with insulation cover (2).

2. A transformer station as in claim 1, wherein housings (I, II) of the compartments are situated side by side along the side walls.

3. A transformer station as in claim 1, wherein insulation cover (2) consists of steel sheet (2.1) facing ventilation slot (C) and layer of insulation foam (2.2).

4. A transformer station as in claim 1, wherein ventilation slot (C) is limited by side covers (3).

5. A transformer station as in claim 1, wherein support frame (5) rests on skids (5.1).

6. A transformer station as in claim 1, wherein the electrical connections are placed in electrical passes (4).

7. A transformer station as in claim 6, wherein electrical passes are situated perpendicularly to the side walls forming ventilation slot (C).

8. A transformer station as in claim 1, wherein compartment (A) of control and signal instrumentation (1) is equipped with doors with seals and remaining compartments (D, E, F, G) are equipped with hatches with seals.

9. A compartments station as in claim 1, wherein in wall (6.2) separating the fan compartment from the compartment of power transformer (6) above horizontal partition (6.1) of power transformer (6) there is inlet opening (6.4) of return air.

10. A transformer station divided into compartments placed in a metallic housings, in which electrical equipment is arranged side by side, among others, a power transformer, an assembly of insulating bushes, a medium voltage isolating switch and control and signal instrumentation, **wherein** on the common wall of the bushing insulators (9) compartment (G) and of the medium voltage isolating switch compartment (F) there are gas expansion openings (8.3), whereas on the wall separating the medium voltage isolating switch compartment (F) from the fan compartment there is a safety membrane equipped with circumferential sealing on its periphery.

11. A transformer station as in claim 1 or 10, wherein the covers of the power transformer (6) compartment are equipped with cooling radiators (10).
